# EUROPEAN PATENT APPLICATION

(11) **EP 1 998 391 A2**
(43) Date of publication of application: **03.12.2008**
(21) Application number: 08251812.7
(22) Date of filing: 23.05.2008
(51) Int. Cl.: H01M 2/16, H01M 10/40, H01M 10/04

(54) **Lithium secondary battery**

(30) Priority: 29.05.2007 KR 20070052175
(71) Applicant: Samsung SDI Co., Ltd., Yongin-si, Gyeonggi-do (KR)
(72) Inventor: Lim, Wanmook, 428-5 Gongse-ri, Gyeonggi-do (KR)
(74) Representative: Mounteney, Simon James

(57) **Abstract**

A lithium secondary battery includes two electrode plates having different polarities and has a ceramic film provided on one electrode plate of the two, wherein the electrode plate coated with the ceramic film has a front edge positioned ahead of a front edge of another electrode plate, and/or has a back edge positioned behind a back edge of the other electrode plate when the two electrode plates are laminated and/or spirally wound. Such a lithium secondary battery may prevent a short circuit between the ceramic film-coated electrode plates and the electrode collector of electrode plates having different polarities, when the ceramic film-coated electrode plates are laminated or spirally wound, thereby improving stability and reliability of the battery.

## Description

### BACKGROUND OF THE INVENTION

### 1. Field of the Invention

Embodiments of the present invention relate to a lithium secondary battery, and more particularly, to a lithium secondary battery in which safety is improved by preventing an internal short circuit.

### 2. Description of the Related Art

Generally, a secondary battery is capable of being recharged, miniaturized in size, and maximized in capacity. Recently, as the demand for portable electronic apparatuses (such as camcorders, laptop computers, and a cell phones) has increased, an improved secondary battery (such as a lithium-ion battery, a lithium-polymer battery, and a Ni-MH battery) has been widely developed as a power supply.

Since the atomic weight of lithium is low, lithium is appropriate for a large-electric capacity battery and is, therefore, frequently used as a component of a secondary battery. Furthermore, since lithium reacts fiercely with water, a non-aqueous electrolyte is also used in a lithium-based battery. Accordingly, the lithium is not affected by an electrolysis voltage of water, and thus, the lithium-based battery has an advantage of being able to generate approximately 3 to 4 volts of electro-motive force.

The non-aqueous electrolyte used in the lithium-ion battery is classified into a liquid electrolyte and a solid electrolyte. The liquid electrolyte is an electrolyte in which lithium salt is dissociated into an organic solvent. Ethylene, carbonate, propylene carbonate, or other carbonates including alkyls or similar organic compounds can be used as the organic solvent.

The ion conductivity of the electrolyte in the lithium-ion secondary battery is low. However, this defect can be overcome somewhat by increasing an active material area of the electrode and a size of opposing areas of both electrodes. However, increasing the size of opposing areas of both electrodes is limited due to various restrictive factors. After all, the low ion conductivity of the electrolyte makes the internal impedance of the battery large in scale, thereby making the internal voltage drop large in scale. In particular, this is the reason to limit the current of the battery when a large current needs to be discharged, and thus restricts the output.

In addition, a film positioned between two electrodes is another reason that the movement of lithium ions is confined. In other words, when the film does not have sufficient permeability and wettability of the electrolyte, the film restricts the lithium ion from moving between two electrodes and, as a result, deteriorates electric characteristics of the battery.

Therefore, the features of the film in terms of the efficiency of the battery can be characterized not only by the heat/chemical resistance and the mechanical strength of the film, but also by the wettability of the electrolyte and the air-gap ratio (void content). The air-gap ratio refers to the proportion of the empty space per optionally sectioned surface of the film.

Meanwhile, the film of the lithium-ion battery is also a safety device that prevents the battery from overheating. Here, if the temperature is raised by an abnormality of the battery, the polyolefin micro-porous membrane, which is a general material of a film, is softened and partly melted at a certain degree of temperature. Therefore, the minute through holes of the micro-porous membrane, which is the passage of the electrolyte and lithium ion, are subsequently blocked. As a result, the movement of lithium ion is stopped and the inner and outer current of the battery is stopped. Accordingly, the rising of temperature is also stopped.

However, when the temperature of the battery rises, the film may become damaged even though the minute through holes are blocked. That is, as the film is partially melted, two electrodes of the battery may contact each other, causing an internal short circuit. The internal short circuit may also occur when the film is shrunk such that two electrodes of the battery contact each other as a result.

Moreover, when the capacity of the battery has been maximized and an over-current flows in the secondary battery, although the micro through holes of the film are blocked, an internal short circuit is more likely to occur due to damage to the film. The film may be damaged because the film continuously melts due to the generated heat, as opposed to lowering the temperature of the battery by blocking current.

Therefore, while it is important to block current by closing the micro-pores of the film, coping with the melting or shrinking problem of the film caused by battery overheating may be more important.

To deal with the problem above, a ceramic film (i.e., ceramic film) that prevents the internal short circuit between electrodes has been used. The general manufacturing method of the ceramic film is as follows: first, a porous liquid is made wherein ceramic particles are evenly scattered into a mixed solution of the binder and the solvent; and an electrode plate, which is an electrode collector to which an active material is coated, is dipped into the porous liquid. Such ceramic film carries out the role of the functional membrane that prevents the short circuit of positive and negative electrode plates, the film being applied to the surface where the positive and negative electrode plates might contact each other.

However, both ends of electrode plates in the ceramic film-coated secondary battery are cut off when manufacturing electrode plates. The cut-off parts of the electrode plates are not coated with the porous liquid. If the cut-off surfaces of the electrode plates that are not coated by the film are exposed to an outside, electrode plates having different polarities contact each other, and thus cause a short circuit when electrodes are laminated or spirally wound.

### SUMMARY OF THE INVENTION

Aspects of the present invention improve the safety of a battery by reforming a winding shape of an electrode to which a ceramic film is applied.

According to an aspect of the present invention, there is provided a battery including: an electrode assembly including a first electrode plate having a first polarity, a second electrode plate having a second polarity different from the first polarity, and a ceramic film provided on the first electrode plate; a can to house the electrode assembly and an electrolyte; and a cap assembly to seal an opening of the can, wherein the first electrode plate has a front edge positioned ahead of a front edge of the second electrode plate, and/or a back edge positioned behind a back edge of the second electrode plate.

The first electrode plate and the second electrode plate may be laminated and/or spirally wound. Furthermore, the ceramic film may be a porous membrane including a combination of ceramic materials and a binder.

One or more materials among silica (SiO₂) alumina (Al₂0₃), zirconium oxide (ZrO₂) and titanium oxide (Ti02) may be used as the ceramic materials.

At least one insulating material from among nitrides of silicon (Si), hydroxides of aluminum (AI), alkoxides of zirconium (Zr), and ketonic compounds of titanium (Ti) may be used as the ceramic materials.

The ceramic film may be provided on the first electrode plate by dipping the first electrode plate into the binder and solvent mixed solution, spraying the mixed solution onto the electrode plate, and/or printing the mixed solution onto a front surface of the first electrode plate.

The first electrode plate may be provided with the ceramic film on both surfaces thereof.

The front edge of the first electrode plate may be spaced 10 mm or more from that of the second electrode plate and/or the back edge of the first electrode plate may be spaced 10 mm or more from that of the second electrode plate.

The first electrode plate may be either the positive electrode plate or the negative electrode plate.

According to another aspect of the present invention, there is provided an electrode assembly for a lithium secondary battery, the electrode assembly including: a first electrode plate having a first polarity; a second electrode plate having a second polarity different from the first polarity; and a ceramic film provided on the first electrode plate, wherein the first electrode plate has a front edge positioned ahead of a front edge of the second electrode plate, and/or a back edge positioned behind a back edge of the second electrode plate.

According to still another aspect of the present invention, there is provided a method of assembling electrode plates for a lithium secondary battery, the method including: coating a first electrode plate having a first polarity with a ceramic film; and combining the first electrode plate with a second electrode plate having a second polarity different from the first polarity such that a front edge of the first electrode plate is ahead of a front edge of the second electrode plate and/or a back edge of the first electrode plate is behind a back edge of the second electrode plate.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the preferred embodiments described by way of example and taken in conjunction with the accompanying drawings of which:
FIG. 1 is an exploded perspective view of a lithium-ion battery according to a preferred embodiment of the present invention.
FIG. 2 is a plane view of which an electrode plate is wound in an electrode assembly shown in FIG. 1.
FIG. 3 is a magnified view of the part III of FIG. 2 which illustrates the central part of the wound electrode assembly according to a preferred embodiment of the present invention.
FIG. 4 is a magnified view of the part IV of FIG. 2 which illustrates the outmost portion of the electrode assembly according to a preferred embodiment of the present invention.
FIG. 5 is a plane view of an electrode assembly according to another preferred embodiment of the present invention.
FIG. 6 is a plane view of an electrode assembly according to another preferred embodiment of the present invention.

### DETAILED DESCRIPTION OF PREFERRED EMBODIMENTS

Reference will now be made in detail to preferred embodiments of the present invention, examples of which are illustrated in the accompanying drawings, wherein like reference numerals refer to the like elements throughout. The embodiments are described below in order to explain the present invention by referring to the figures.

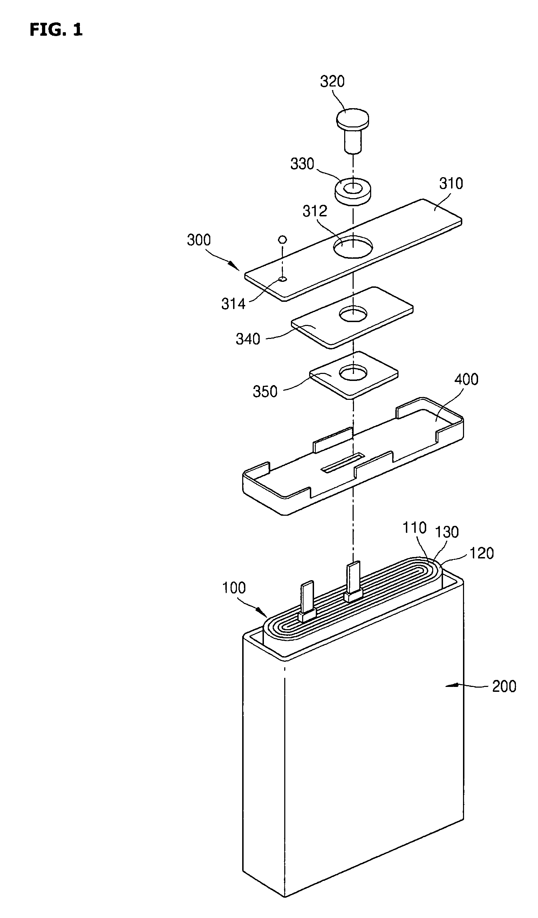

FIG. 1 is an exploded perspective view of a lithium-ion battery according to a preferred embodiment of the present invention. Referring to FIG. 1, a lithium ion battery according to a preferred embodiment of the present invention includes: an electrode assembly 100 including electrode plates 110 and 120; a can 200 to house the electrode assembly 100; an electrolyte injected into the can 200 and acting as a mediator for passing lithium ions; and a cap assembly 300 to seal the opening of the can 200 housing the electrode assembly 100 and the electrolyte. The electrode assembly 100 includes: a positive electrode plate 110 in which positive electrode active materials are coated on a predetermined area of at least one surface thereof; a negative electrode plate 120 in which negative electrode active materials are coated on a predetermined area of at least one surface thereof; and a film 130 (i.e., film) located between the positive electrode plate and the negative electrode plate to prevent a short circuit therebetween and to pass lithium ions.

The positive electrode plate 110 and the negative electrode plate 120 include an electrode collector and an electrode active material layer. The electrode active material layer may be manufactured as a slurry in which conducting materials, a bonding agent, and an organic solvent are mixed. Furthermore, the electrode active material layer is coated onto the electrode collector. Therefore, each of the positive and negative active materials is attached to the electrode collector by the bonding agent included therein to form an electrode active material layer.

According to preferred embodiments of the present invention, the film 130 is a ceramic film in which ceramic material is coated onto either the positive electrode plate 110 or the negative electrode plate 120. However, it is understood that aspects of the present invention are not limited thereto, and the film 130 may be coated with a different material with similar effect.

The ceramic film 130 includes a porous membrane formed by combining the ceramic materials with the binder. Specifically, after a paste is made by mixing the ceramic material with the binder, the paste forms a porous membrane on the electrode plate. That is, a binder material, a solvent, and a ceramic powder are combined into a mixture liquid in order to form the porous membrane. Accordingly, the mixture liquid is coated onto the surface of the electrode plate to form the ceramic film 130. In other words, to form the ceramic film on the electrode plate 110 and 120, methods of dipping the electrode plate into the binder-solvent mixed solution, spraying the mixed solution onto the electrode plate, and printing the mixed solution onto the electrode plate are applied.

At least one among silica (SiO₂), alumina (Al₂O₃), zirconium oxide (ZrO₂), and titanium oxide (TiO₂) may be used as the ceramic materials. In addition, at least one insulating material among nitrides of silicon (Si), hydroxides of aluminum (Al), alkoxides of zirconium (Zr), ketonic compounds of titanium (Ti) may be used as the ceramic materials. However, it is understood that aspects of the present invention are not limited to these materials.

The cap assembly 300, which has a size corresponding to the opening of the can 200, includes: a cap plate 310 that has a terminal through hole 312 formed in the middle thereof and an electrolyte injection hole 314 formed in one side thereof; an electrode terminal 320 inserted into the terminal through hole 312; a gasket 330 interposed when the electrode terminal 320 is inserted into the terminal through hole 312; and an insulating plate 340 and a terminal plate 350 that are provided at a lower part of the cap plate 310. An insulating cover 400 may, although not necessarily, be mounted on an upper surface of the electrode assembly 100.

According to a preferred embodiment of the present invention, when both edges of an electrode plate 110 and 120 are cut off while being manufactured, the cut edges of the electrode plate 110 and 120 are not coated with the ceramic film 130 since the ceramic film 130 of the lithium secondary battery is coated on both sides of either the positive electrode plate 110 or the negative electrode plate 120 which have different polarities. Both edges of an electrode plate 110 and 120 that are exposed to an outside might contact the collector of the other electrode plate 110 and 120 that is not coated.

Therefore, when the electrode plates are laminated or wound in a jelly-roll type, there is an increased possibility that both ends of the ceramic film-coated electrode plate contact the electrode collector of the other electrode plate that is not coated with the ceramic film. In fact, the possibility of an internal short circuit due to contact of both ends of an electrode plate 110 and 120 is increased when the battery is expanded or shrunk repeatedly when recharged or discharged.

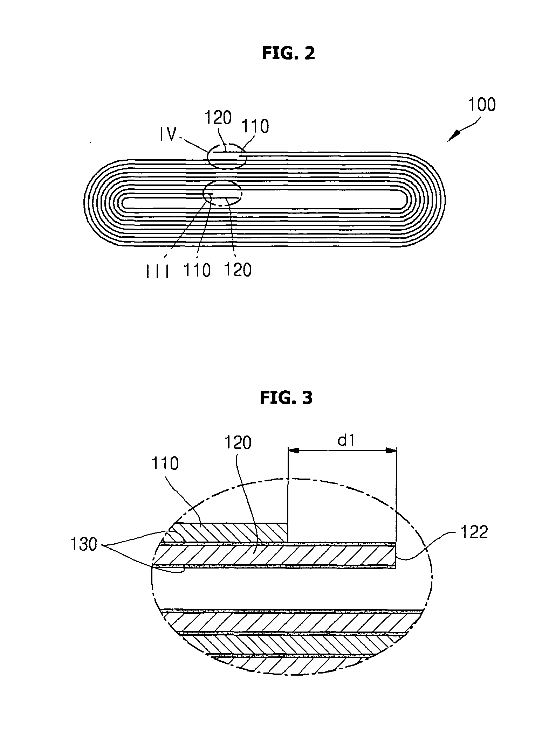

According to preferred embodiments of the present invention, when the front edges of the positive electrode plate 110 and the negative electrode plate 120 are wound, the front edge of the ceramic film-coated electrode plate 110 and 120 is to be inserted and wound first, and the back edge of the ceramic film-coated electrode is to be wound later. This will be described in more detail with reference to FIGs. 2 4.

According to a preferred embodiment of the present invention, the electrode assembly 100 of the lithium secondary battery is in a state such that the negative electrode plate 120 is coated with the ceramic film 130. During a winding of the electrode assembly 100, as illustrated in FIG. 3, the front edge of the negative electrode plate 120 is wound first, and the front edge of the positive electrode plate 110 is wound afterwards. Then, since the front edge of the positive electrode plate 110 is located behind that of the negative electrode plate 120 (by a distance d1 illustrated in FIG. 3), a front edge part 122 that is cut off from the negative electrode plate 120 and is exposed to an outside does not contact the electrode collector of the positive electrode plate 110. It is understood that according to other aspects, the positive electrode plate 110 is wound first and is coated, and the front edge of the negative electrode plate 120 is located behind that of the positive electrode plate 110.

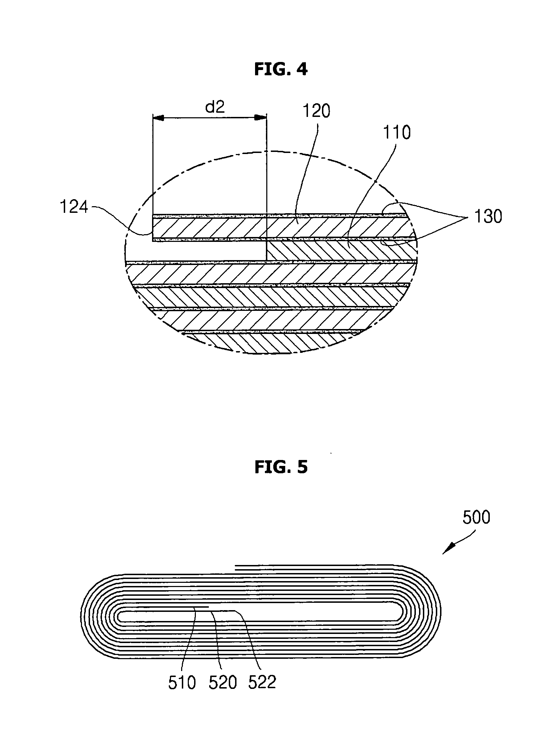

Furthermore, once the winding is finished, as illustrated in FIG. 4, the back edge of the negative electrode plate 120 is longer in length than that of the positive electrode plate 110 (by a distance d2 illustrated in FIG. 4). Therefore, the back edge part 124 that is cut-off from the negative electrode plate 120 and is exposed to an outside is located behind the electrode collector of the positive electrode plate 110. Accordingly, the back edge 124 of the negative electrode plate 120 does not contact the electrode collector of the positive electrode plate 110.

When the electrode plates 110 and 120 are wound, the front edge of the positive electrode 110 is wound behind the front edge of the negative electrode plate 120 at, for example, an interval of at least 10 mm. Moreover, at the end point of winding, the back edge of the positive electrode plate 110 is wound ahead of the back edge of the negative electrode plate 120 at, for example, an interval of at least 10 mm.

As mentioned above, when the interval d between the front edge of the negative electrode plate 120 and the front edge of the positive electrode plate 100 or between the back edge of the positive electrode plate 110 and the back edge of the negative electrode plate 120 is, for example, 10 mm or more, the possibility that both ends of the negative electrode plate 120 contact the electrode collector of the positive electrode plate 110 can be eliminated, although the electrode assembly 100 is entirely expanded or shrunk when the battery is recharged or discharged. It is understood that a distance of more or less than 10 mm may be used as the reference distance, according to, for example, experimentation on the battery to determine a minimum distance to eliminate the chance of contact between both ends of the negative electrode plate 120 and the electrode collector of the positive electrode plate 110.

Therefore, the entire length of the ceramic film 130 coated negative electrode plate 120 may be longer than that of the positive electrode plate 110 in a horizontal direction. However, it is understood that aspects of the present invention are not limited thereto.

In other words, according to another preferred embodiment of the present invention (illustrated in FIG. 5), a length of the negative electrode plate 520 is equal to or shorter than that of the positive electrode plate 510. Accordingly, the negative electrode plate 520 of the lithium secondary battery 500 is wound before the positive electrode plate 510, and the front edge part 522 of the negative electrode plate 520 is positioned ahead of that of the positive electrode plate 510. Therefore, the front edge part 522 is exposed from the negative electrode plate 520 to an outside, but does not contact the electrode collector of the positive electrode plate 510.

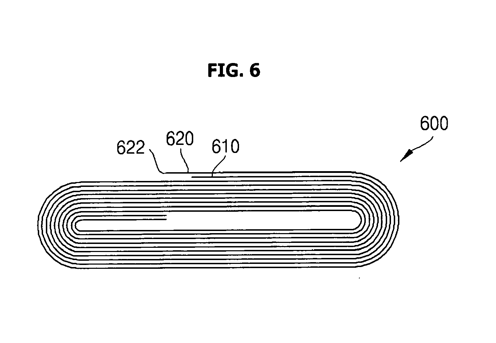

According to another preferred embodiment of the present invention (illustrated in FIG.6), the back edge of the negative electrode plate 620 of the lithium secondary battery 600 is longer than that of the positive electrode plate 610 such that the negative electrode plate 620 is wound behind the back edge of the positive electrode plate 610. Therefore the back edge part 622 of the negative electrode plate 620 does not contact the electrode collector of the positive electrode plate 610.

Based on the foregoing, aspects of the present invention prevent an internal short circuit by winding the electrode plates such that the front edge of the ceramic film-coated electrode plate is located ahead of the front edge of the other electrode plate, and/or that the back edge of the ceramic film-coated electrode plate is located behind the back edge of the other electrode plate. Since the method of forming the ceramic film in the two embodiments illustrated in FIGs. 5 and 6 is the same as the configuration of the embodiment illustrated in FIG 1, a description thereof will be omitted herein.

Although aspects of the present invention have been described above wherein the negative electrode plate is coated with the ceramic film therein, aspects of the present invention may be applied wherein the ceramic film is coated onto the positive electrode plate.

Furthermore, although aspects of the present invention have been described with reference to a square type secondary battery, aspects of the present invention may be applied to a cylinder type secondary battery or a pouch type secondary battery in which the wound or laminated electrode assembly is used.

In addition, aspects of the present invention may also be applied to an electrode assembly in which the electrode plate is laminated instead of wound, whereby the front edge part and/or the back edge part of the ceramic film-coated electrode is longer in length than those of the other electrode that is not coated with the ceramic film.

As mentioned above, according to aspects of the present invention, the problem of a short circuit in a lithium secondary battery may be prevented, thereby improving a stability and a reliability of the battery.

Although a few embodiments of the present invention have been shown and described, it would be appreciated by those skilled in the art that changes may be made without departing from the principles of the invention.

## Claims

1. A lithium secondary battery, comprising:
an electrode assembly comprising a first electrode plate having a first polarity, a second electrode plate having a second polarity different from the first polarity, and a ceramic film provided on the first electrode plate;
a can to house the electrode assembly and an electrolyte; and
a cap assembly to seal an opening of the can,
wherein the first electrode plate has a front edge positioned ahead of a front edge of the second electrode plate, and/or a back edge positioned behind a back edge of the second electrode plate.

2. The lithium secondary battery as claimed in claim 1, wherein the first electrode plate and the second electrode plate are laminated and/or spirally wound.

3. The lithium secondary battery as claimed in claim 1, wherein the ceramic film is a porous membrane comprising a combination of ceramic materials and a binder.

4. The lithium secondary battery as claimed in claim 3, wherein the ceramic materials are one or more materials from among silica (SiO₂), alumina (Al₂0₃), zirconium oxide (ZrO₂), and titanium oxide (TiO₂).

5. The lithium secondary battery as claimed in claim 3, wherein the ceramic materials are at least one insulating material from among nitrides of silicon (Si), hydroxides of aluminum (AI), alkoxides of zirconium (Zr), and ketonic compounds of titanium (Ti).

6. The lithium secondary battery as claimed in any one of the preceding claims,
wherein the ceramic film is provided on the first electrode plate by dipping the first electrode plate into a solution mixed with the ceramic materials, the binder, and a solvent, by spraying the mixed solution onto the first electrode plate, and/or by printing the mixed solution onto a front surface of the first electrode plate.

7. The lithium secondary battery as claimed in any one of the preceding claims,
wherein the first electrode plate is provided with the ceramic film on both surfaces thereof.

8. The lithium secondary battery as claimed in any one of the preceding claims,
wherein the front edge of the first electrode plate is positioned at least 10 mm ahead of the front edge of the second electrode plate and/or the back edge of the first electrode plate is positioned at least 10 mm behind the back edge of the second electrode plate.

9. The lithium secondary battery as claimed in any one of the preceding claims,
wherein the first electrode plate is a negative electrode plate.

10. The lithium secondary battery as claimed in any one of claims 1 to 8,
wherein the first electrode plate is a positive electrode plate.

11. An electrode assembly for a lithium secondary battery, the electrode assembly comprising:
a first electrode plate having a first polarity;
a second electrode plate having a second polarity different from the first polarity; and
a ceramic film provided on the first electrode plate,
wherein the first electrode plate has a front edge positioned ahead of a front edge of the second electrode plate, and/or a back edge positioned behind a back edge of the second electrode plate.

12. The electrode assembly as claimed in claim 11, wherein the ceramic film is a porous membrane comprising a combination of ceramic materials and a binder.

13. The electrode assembly as claimed in any one of claims 11 or 12, wherein the ceramic film is provided on the first electrode plate by dipping the first electrode plate into a solution mixed with the ceramic materials, the binder, and a solvent, by spraying the mixed solution onto the first electrode plate, and/or by printing the mixed solution onto a front surface of the first electrode plate.

14. The electrode assembly as claimed in any one of claims 11 to 13, wherein the first electrode plate is provided with the ceramic film on both surfaces thereof.

15. A method of assembling electrode plates for a lithium secondary battery, the method comprising:
coating a first electrode plate having a first polarity with a ceramic film; and
combining the first electrode plate with a second electrode plate having a second polarity different from the first polarity such that a front edge of the first electrode plate is ahead of a front edge of the second electrode plate and/or a back edge of the first electrode plate is behind a back edge of the second electrode plate.

16. The method as claimed in claim 15, wherein the first electrode plate and the second electrode plate are laminated and/or spirally wound.

17. The method as claimed in any one of claims 15 or 16, wherein the ceramic film is a porous membrane comprising a combination of ceramic materials and a binder.

18. The method as claimed in claim 17, wherein the coating of the first electrode plate comprises dipping the first electrode plate into a solution mixed with the ceramic materials, the binder, and a solvent.

19. The method as claimed in claim 17, wherein the coating of the first electrode plate comprises spraying a solution mixed with the ceramic materials, the binder, and a solvent onto the first electrode plate.

20. The method as claimed in claim 17, wherein the coating of the first electrode plate comprises printing a solution mixed with the ceramic materials, the binder, and a solvent onto a front surface of the first electrode plate.
